# EUROPEAN PATENT APPLICATION

(11) **EP 3 913 513 A1**
(43) Date of publication of application: **24.11.2021**
(21) Application number: 20208938.9
(22) Date of filing: 20.11.2020
(51) Int. Cl.: G06F 21/57, G06F 11/36, G06F 21/60, G06F 21/62

(54) **SECURE DEBUG OF FPGA DESIGN**

(30) Priority: 22.05.2020 US 202016881584
(71) Applicant: INTEL Corporation, Santa Clara, CA 95054 (US)
(72) Inventor: LAL, Reshma, Hilsboro, OR Oregon 97124 (US); DESAI, Soham Jayesh, Hilsboro, OR Oregon 97214 (US)
(74) Representative: Viering, Jentschura & Partner mbB Patent- und Rechtsanwälte

(57) **Abstract**

Technologies to perform a secure debug of a FPGA are described. In some examples an apparatus comprises an accelerator device comprising processing circuity to facilitate acceleration of a processing workload executable on a remote processing device, a computer-readable memory to store logic operations executable on the accelerator device, and a debug module. The debug module comprises one or more debug registers to store debug data for the logic operations executable on the accelerator device and processing circuitry to receive, from a debug application on the remote processing device, a memory access request directed to a target debug register of the one or more debug registers, encrypt the debug data in the target debug register to generate encrypted debug data, and return the encrypted debug data to the debug application. Other embodiments are described and claimed.

## Description

### BACKGROUND

Current processors may provide support for a trusted execution environment such as a secure enclave. Secure enclaves include segments of memory (including code and/or data) protected by the processor from unauthorized access including unauthorized reads and writes. In particular, certain processors may include Intel® Software Guard Extensions (SGX) to provide secure enclave support. In particular, SGX provides confidentiality, integrity, and replay-protection to the secure enclave data while the data is resident in the platform memory and thus provides protection against both software and hardware attacks. The on-chip boundary forms a natural security boundary, where data and code may be stored in plaintext and assumed to be secure.

Modern computing devices may include general-purpose processor cores as well as a variety of hardware accelerators for offloading compute-intensive workloads or performing specialized tasks. Hardware accelerators may include, for example, one or more field-programmable gate arrays (FPGAs), which may include programmable digital logic resources that may be configured by the end user or system integrator. Hardware accelerators may also include one or more application-specific integrated circuits (ASICs). Hardware accelerators may be embodied as I/O devices that communicate with the processor core over an I/O interconnect.

Cloud service providers (CSPs) rent hardware, including field programmable gate array (FPGA) hardware, to cloud customers for developing hardware (HW) designs or for acceleration of a customer workload which executes on infrastructure provided by the cloud service provider. This model of offering access to an FPGA as a service allows their customers to develop, debug, run and monitor their application on the FPGA instances operated by the CSP, but also raises various security concerns.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
Fig. 1 is a simplified block diagram of at least one embodiment of a computing device, according to embodiments.
Fig. 2 is a simplified block diagram of at least one embodiment of an accelerator device of the computing device of Fig. 1, according to embodiments.
Fig. 3 is a simplified block diagram of at least one embodiment of an environment of the computing devices of Figs. 1-2, according to embodiments.
Figs. 4-7 are simplified block diagrams of a computing environment which may be adapted to implement operations for secure debug of an FPGA, according to embodiments.
Figs. 8-9 are simplified flow diagrams illustrating operations in a method to impellent secure debug of an FPGA, according to embodiments.
Fig. 10 is a schematic illustration of components of a device to provide secure direct memory access transactions in a virtualized computing environment, according to embodiments.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

As described above, some cloud service providers (CSPs) rent hardware, including field programmable gate array (FPGA) hardware, to cloud customers for developing hardware (HW) designs or for acceleration of a customer workload which executes on infrastructure provided by the cloud service provider. This model of offering access to an FPGA as a service allows their customers to develop, debug, run and monitor their application on the FPGA instances operated by the CSP, but also raises various security concerns.

Customer's use of FPGA instances falls in two broad usage categories. The first category includes development of hardware design, register transfer level (RTL) design, hardware prototyping, and pre-silicon validation. Other instances include acceleration of workloads such as artificial intelligence (AI) and/or machine language (ML) applications by offloading parts of their workload from a host CPU to the FPGA, which operates as an accelerator. The hardware acceleration logic, also referred to as a compute kernel, allows the customer to run usage-specific logic such as deep learning (DK) neural network for inference usage.

For both categories of usages, customers need to have remote access to debug interfaces inside the FPGA in order to test their hardware designs and to monitor execution of their compute kernel(s). The debug feature may be used to identify hardware design issues or RTL coding errors to ensure their hardware design is functioning as expected. Customers may also use the debug probe to monitor the signals and intermediate states for gaining insight into the execution of their compute kernel.

Cloud customers with security and privacy sensitive workloads may be concerned about leakage of their data and/or intellectual property on cloud platform resulting from potential compromises of CSP's system software (OS and VMM). Some of the major security problems for customers who use FPGAs in cloud include finding ways to program their bitstreams into the remote FPGA without revealing their design, which represents their IP, finding was to protect offloading their workload (e.g. data) to the FPGA from a trusted execution environment (TEE), such as SGX, and finding ways to expose debug capabilities to a remote client while still preserving confidentiality of their assets such as FPGA design, in presence of untrusted CSP software.

While hardware vendors may provide debug hooks on an FPGA to enable customers to build software solutions to monitor, update, and debug designs through a JTAG port without using input/output (I/O) pins, most existing solutions do not have a mechanism to restrict use of the debug interface to the customer, and therefore are vulnerable to leakage of a customer's sensitive design. Subject matter described herein addresses these and other issues by providing mechanisms to provide access controls to the debug interface of an FPGA such that the customer can debug or monitor their bitstream(s) on the FPGA from a remote client machine, but the untrusted system software which facilitates debugging does not have access to debug content generated during the debug process. In some examples access control for the FPGA debug interface may be provided using a cryptographic protocol between a customer's debug application and the FPGA debug module. This enables customer software to monitor, update, and debug designs, while restricting untrusted software which facilitates the debug process from accessing debug content in cleartext or modifying intermediate data or state without detection.

In one implementation, a debug cryptographic module may be positioned inside an FPGA. The debug cryptographic module can be provisioned by a customer's debug application with a symmetric key. The debug cryptographic module may be positioned inline with memory mapped IO (MMIO) for accessing debug registers in the FPGA and may encrypt/decrypt debug data accessed by software.

In another implementation, the debug cryptographic module may be positioned inside a debug module of the FPGA. In this implementation, when software reads debug data, the debug data is encrypted by the debug module before it is written to debug registers of the FPGA. This may allow for higher level of protection because the customer data is encrypted when it leaves the customer logic making it opaque to the CSP's management logic that facilitates debug register read/write by the software

In both implementations, when debug content is read by software, the content is encrypted and optionally may be integrity protected using a cryptographic key (i.e., a symmetric key) programmed by the customer. Thus, the content can be decrypted only by the customer's debug application which has possession of the symmetric key.

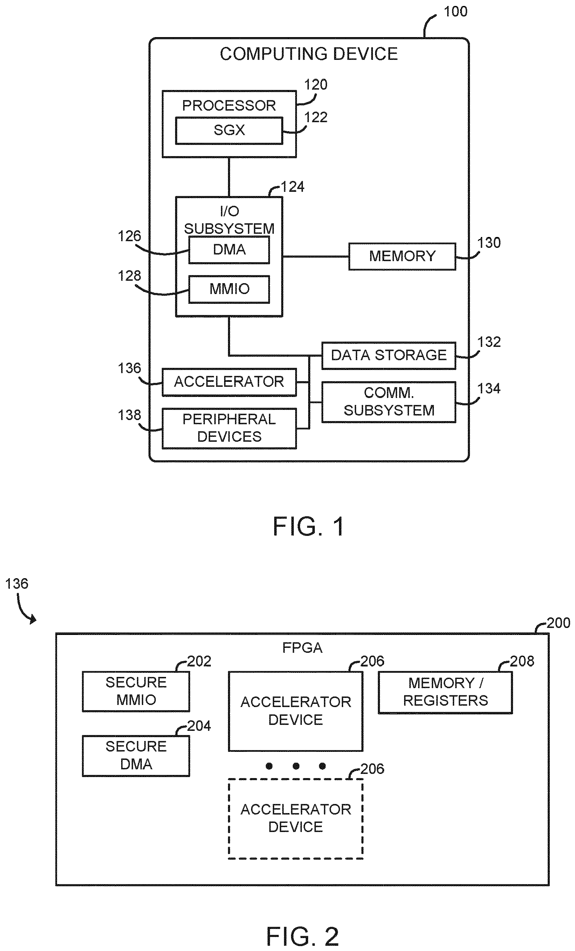

Further details of structure and techniques to provide secure debug of a FPGA design will be provided with reference to Figs. 1-10. Fig. 1 is a simplified block diagram of at least one embodiment of a computing device, according to embodiments. Referring to Fig. 1, in some examples a computing device 100 includes a processor 120 and an accelerator device 136, such as a field-programmable gate array (FPGA). In some examples, as described further below, a trusted execution environment (TEE) established by the processor 120 securely communicates data with the accelerator 136. Data may be transferred using memory-mapped I/O (MMIO) transactions or direct memory access (DMA) transactions. For example, the TEE may perform an MMIO write transaction that includes encrypted data, and the accelerator 136 decrypts the data and performs the write. As another example, the TEE may perform an MMIO read request transaction, and the accelerator 136 may read the requested data, encrypt the data, and perform an MMIO read response transaction that includes the encrypted data. In another example, the TEE may configure the accelerator 136 to perform a DMA operation, and the accelerator 136 performs a memory transfer, performs a cryptographic operation (i.e., encryption or decryption), and forwards the result. In some examples, the TEE and the accelerator 136 may generate authentication tags (ATs) for the transferred data and may use those ATs to validate the transactions. The computing device 100 may thus keep untrusted software of the computing device 100, such as the operating system or virtual machine monitor, outside of the trusted code base (TCB) of the TEE and the accelerator 136. Thus, the computing device 100 may secure data exchanged or otherwise processed by a TEE and an accelerator 136 from an owner of the computing device 100 (e.g., a cloud service provider) or other tenants of the computing device 100. Accordingly, the computing device 100 may improve security and performance for multi-tenant environments by allowing secure use of accelerators.

The computing device 100 may be embodied as any type of device capable of performing the functions described herein. For example, the computing device 100 may be embodied as, without limitation, a computer, a laptop computer, a tablet computer, a notebook computer, a mobile computing device, a smartphone, a wearable computing device, a multiprocessor system, a server, a workstation, and/or a consumer electronic device. As shown in Fig. 1, the illustrative computing device 100 includes a processor 120, an I/O subsystem 124, a memory 130, and a data storage device 132. Additionally, in some embodiments, one or more of the illustrative components may be incorporated in, or otherwise form a portion of, another component. For example, the memory 130, or portions thereof, may be incorporated in the processor 120 in some embodiments.

The processor 120 may be embodied as any type of processor capable of performing the functions described herein. For example, the processor 120 may be embodied as a single or multi-core processor(s), digital signal processor, microcontroller, or other processor or processing/controlling circuit. As shown, the processor 120 illustratively includes secure enclave support 122, which allows the processor 120 to establish a trusted execution environment known as a secure enclave, in which executing code may be measured, verified, and/or otherwise determined to be authentic. Additionally, code and data included in the secure enclave may be encrypted or otherwise protected from being accessed by code executing outside of the secure enclave. For example, code and data included in the secure enclave may be protected by hardware protection mechanisms of the processor 120 while being executed or while being stored in certain protected cache memory of the processor 120. The code and data included in the secure enclave may be encrypted when stored in a shared cache or the main memory 130. The secure enclave support 122 may be embodied as a set of processor instruction extensions that allows the processor 120 to establish one or more secure enclaves in the memory 130. For example, the secure enclave support 122 may be embodied as Intel® Software Guard Extensions (SGX) technology.

The memory 130 may be embodied as any type of volatile or non-volatile memory or data storage capable of performing the functions described herein. In operation, the memory 130 may store various data and software used during operation of the computing device 100 such as operating systems, applications, programs, libraries, and drivers. As shown, the memory 130 may be communicatively coupled to the processor 120 via the I/O subsystem 124, which may be embodied as circuitry and/or components to facilitate input/output operations with the processor 120, the memory 130, and other components of the computing device 100. For example, the I/O subsystem 124 may be embodied as, or otherwise include, memory controller hubs, input/output control hubs, sensor hubs, host controllers, firmware devices, communication links (i.e., point-to-point links, bus links, wires, cables, light guides, printed circuit board traces, etc.) and/or other components and subsystems to facilitate the input/output operations. In some embodiments, the memory 130 may be directly coupled to the processor 120, for example via an integrated memory controller hub. Additionally, in some embodiments, the I/O subsystem 124 may form a portion of a system-on-a-chip (SoC) and be incorporated, along with the processor 120, the memory 130, the accelerator 136, and/or other components of the computing device 100, on a single integrated circuit chip. Additionally, or alternatively, in some embodiments the processor 120 may include an integrated memory controller and a system agent, which may be embodied as a logic block in which data traffic from processor cores and I/O devices converges before being sent to the memory 130.

As shown, the I/O subsystem 124 includes a direct memory access (DMA) engine 126 and a memory-mapped I/O (MMIO) engine 128. The processor 120, including secure enclaves established with the secure enclave support 122, may communicate with the accelerator 136 with one or more DMA transactions using the DMA engine 126 and/or with one or more MMIO transactions using the MMIO engine 128. The computing device 100 may include multiple DMA engines 126 and/or MMIO engines 128 for handling DMA and MMIO read/write transactions based on bandwidth between the processor 120 and the accelerator 136. Although illustrated as being included in the I/O subsystem 124, it should be understood that in some embodiments the DMA engine 126 and/or the MMIO engine 128 may be included in other components of the computing device 100 (e.g., the processor 120, memory controller, or system agent), or in some embodiments may be embodied as separate components.

The data storage device 132 may be embodied as any type of device or devices configured for short-term or long-term storage of data such as, for example, memory devices and circuits, memory cards, hard disk drives, solid-state drives, non-volatile flash memory, or other data storage devices. The computing device 100 may also include a communications subsystem 134, which may be embodied as any communication circuit, device, or collection thereof, capable of enabling communications between the computing device 100 and other remote devices over a computer network (not shown). The communications subsystem 134 may be configured to use any one or more communication technology (e.g., wired or wireless communications) and associated protocols (e.g., Ethernet, Bluetooth®, Wi-Fi®, WiMAX, 3G, 4G LTE, etc.) to effect such communication.

The accelerator 136 may be embodied as a field-programmable gate array (FPGA), an application-specific integrated circuit (ASIC), a coprocessor, or other digital logic device capable of performing accelerated functions (e.g., accelerated application functions, accelerated network functions, or other accelerated functions). Illustratively, the accelerator 136 is an FPGA, which may be embodied as an integrated circuit including programmable digital logic resources that may be configured after manufacture. The FPGA may include, for example, a configurable array of logic blocks in communication over a configurable data interchange. The accelerator 136 may be coupled to the processor 120 via a high-speed connection interface such as a peripheral bus (e.g., a PCI Express bus) or an inter-processor interconnect (e.g., an in-die interconnect (IDI) or QuickPath Interconnect (QPI)), or via any other appropriate interconnect. The accelerator 136 may receive data and/or commands for processing from the processor 120 and return results data to the processor 120 via DMA, MMIO, or other data transfer transactions.

As shown, the computing device 100 may further include one or more peripheral devices 138. The peripheral devices 138 may include any number of additional input/output devices, interface devices, hardware accelerators, and/or other peripheral devices. For example, in some embodiments, the peripheral devices 138 may include a touch screen, graphics circuitry, a graphical processing unit (GPU) and/or processor graphics, an audio device, a microphone, a camera, a keyboard, a mouse, a network interface, and/or other input/output devices, interface devices, and/or peripheral devices.

Referring now to Fig. 2, an illustrative embodiment of a field-programmable gate array (FPGA) 200 is shown. As shown, the FPGA 200 is one potential embodiment of an accelerator 136. The illustratively FPGA 200 includes a secure MMIO engine 202, a secure DMA engine 204, one or more accelerator devices 206, and memory/registers 208. As described further below, the secure MMIO engine 202 and the secure DMA engine 204 perform in-line authenticated cryptographic operations on data transferred between the processor 120 (e.g., a secure enclave established by the processor) and the FPGA 200 (e.g., one or more accelerator devices 206). In some embodiments, the secure MMIO engine 202 and/or the secure DMA engine 204 may intercept, filter, or otherwise process data traffic on one or more cache-coherent interconnects, internal buses, or other interconnects of the FPGA 200.

Each accelerator device 206 may be embodied as logic resources of the FPGA 200 that are configured to perform an acceleration task. Each accelerator device 206 may be associated with an application executed by the computing device 100 in a secure enclave or other trusted execution environment. Each accelerator device 206 may be configured or otherwise supplied by a tenant or other user of the computing device 100. For example, each accelerator device 206 may correspond to a bitstream image programmed to the FPGA 200. As described further below, data processed by each accelerator device 206, including data exchanged with the trusted execution environment, may be cryptographically protected from untrusted components of the computing device 100 (e.g., protected from software outside of the trusted code base of the tenant enclave). Each accelerator device 206 may access or otherwise process stored in the memory/registers 208, which may be embodied as internal registers, cache, SRAM, storage, or other memory of the FPGA 200. In some embodiments, the memory 208 may also include external DRAM or other dedicated memory coupled to the FPGA 200.

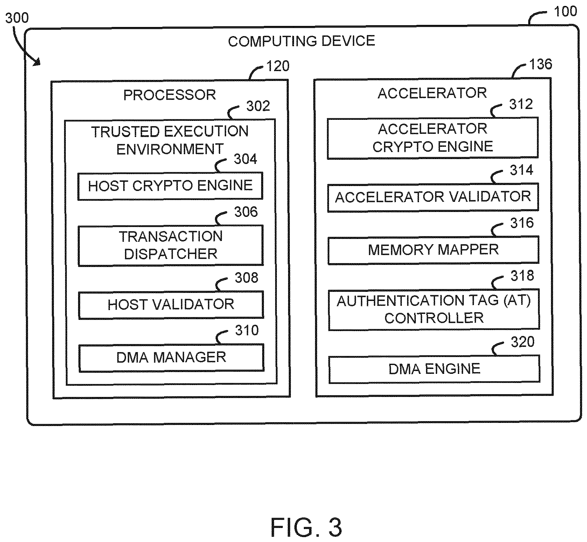

Fig. 3 is a simplified block diagram of at least one embodiment of an environment of the computing devices of Figs. 1-2, according to embodiments. Referring now to Fig. 3, in an illustrative embodiment, the computing device 100 establishes an environment 300 during operation. The illustrative environment 300 includes a trusted execution environment (TEE) 302 and the accelerator 136. The TEE 302 further includes a host cryptographic engine 304, a transaction dispatcher 306, a host validator 308, and a direct memory access (DMA) manager 310. The accelerator 136 includes an accelerator cryptographic engine 312, an accelerator validator 314, a memory mapper 316, an authentication tag (AT) controller 318, and a DMA engine 320. The various components of the environment 300 may be embodied as hardware, firmware, software, or a combination thereof. As such, in some embodiments, one or more of the components of the environment 300 may be embodied as circuitry or collection of electrical devices (e.g., host cryptographic engine circuitry 304, transaction dispatcher circuitry 306, host validator circuitry 308, DMA manager circuitry 310, accelerator cryptographic engine circuitry 312, accelerator validator circuitry 314, memory mapper circuitry 316, AT controller circuitry 318, and/or DMA engine circuitry 320). It should be appreciated that, in such embodiments, one or more of the host cryptographic engine circuitry 304, the transaction dispatcher circuitry 306, the host validator circuitry 308, the DMA manager circuitry 310, the accelerator cryptographic engine circuitry 312, the accelerator validator circuitry 314, the memory mapper circuitry 316, the AT controller circuitry 318, and/or the DMA engine circuitry 320 may form a portion of the processor 120, the I/O subsystem 124, the accelerator 136, and/or other components of the computing device 100. Additionally, in some embodiments, one or more of the illustrative components may form a portion of another component and/or one or more of the illustrative components may be independent of one another.

The TEE 302 may be embodied as a trusted execution environment of the computing device 100 that is authenticated and protected from unauthorized access using hardware support of the computing device 100, such as the secure enclave support 122 of the processor 120. Illustratively, the TEE 302 may be embodied as one or more secure enclaves established using Intel SGX technology. The TEE 302 may also include or otherwise interface with one or more drivers, libraries, or other components of the computing device 100 to interface with the accelerator 136.

The host cryptographic engine 304 is configured to generate an authentication tag (AT) based on a memory-mapped I/O (MMIO) transaction and to write that AT to an AT register of the accelerator 136. For an MMIO write request, the host cryptographic engine 304 is further configured to encrypt a data item to generate an encrypted data item, and the AT is generated in response to encrypting the data item. For an MMIO read request, the AT is generated based on an address associated with MMIO read request.

The transaction dispatcher 306 is configured to dispatch the memory-mapped I/O transaction (e.g., an MMIO write request or an MMIO read request) to the accelerator 136 after writing the calculated AT to the AT register. An MMIO write request may be dispatched with the encrypted data item.

The host validator 308 may be configured to verify that an MMIO write request succeeded in response dispatching the MMIO write request. Verifying that the MMIO write request succeeded may include securely reading a status register of the accelerator 136, securely reading a value at the address of the MMIO write from the accelerator 136, or reading an AT register of the accelerator 136 that returns an AT value calculated by the accelerator 136, as described below. For MMIO read requests, the host validator 308 may be further configured to generate an AT based on an encrypted data item included in a MMIO read response dispatched from the accelerator 136; read a reported AT from a register of the accelerator 136; and determine whether the AT generated by the TEE 302 matches the AT reported by the accelerator 136. The host validator 308 may be further configured to indicate an error if those ATs do not match, which provides assurance that data was not modified on the way from the TEE 302 to the accelerator 136.

The accelerator cryptographic engine 312 is configured to perform a cryptographic operation associated with the MMIO transaction and to generate an AT based on the MMIO transaction in response to the MMIO transaction being dispatched. For an MMIO write request, the cryptographic operation includes decrypting an encrypted data item received from the TEE 302 to generate a data item, and the AT is generated based on the encrypted data item. For an MMIO read request, the cryptographic operation includes encrypting a data item from a memory of the accelerator 136 to generate an encrypted data item, and the AT is generated based on that encrypted data item.

The accelerator validator 314 is configured to determine whether the AT written by the TEE 302 matches the AT determined by the accelerator 136. The accelerator validator 314 is further configured to drop the MMIO transaction if those ATs do not match. For MMIO read requests, the accelerator validator 314 may be configured to generate a poisoned AT in response to dropping the MMIO read request, and may be further configured to dispatch a MMIO read response with a poisoned data item to the TEE 302 in response to dropping the MMIO read request.

The memory mapper 316 is configured to commit the MMIO transaction in response to determining that the AT written by the TEE 302 matches the AT generated by the accelerator 136. For an MMIO write request, committing the transaction may include storing the data item in a memory of the accelerator 136. The memory mapper 316 may be further configured to set a status register to indicate success in response to storing the data item. For an MMIO read request, committing the transaction may include reading the data item at the address in the memory of the accelerator 136 and dispatching an MMIO read response with the encrypted data item to the TEE 302.

The DMA manager 310 is configured to securely write an initialization command to the accelerator 136 to initialize a secure DMA transfer. The DMA manager 310 is further configured to securely configure a descriptor indicative of a host memory buffer, an accelerator 136 buffer, and a transfer direction. The transfer direction may be host to accelerator 136 or accelerator 136 to host. The DMA manager 310 is further configured to securely write a finalization command to the accelerator 136 to finalize an authentication tag (AT) for the secure DMA transfer. The initialization command, the descriptor, and the finalization command may each be securely written and/or configured with an MMIO write request. The DMA manager 310 may be further configured to determine whether to transfer additional data in response to securely configuring the descriptor, the finalization command may be securely written in response to determining that no additional data remains for transfer.

The AT controller 318 is configured to initialize an AT in response to the initialization command from the TEE 302. The AT controller 318 is further configured to finalize the AT in response to the finalization command from the TEE 302.

The DMA engine 320 is configured to transfer data between the host memory buffer and the accelerator 136 buffer in response to the descriptor from the TEE 302. For a transfer from host to accelerator 136, transferring the data includes copying encrypted data from the host memory buffer and forwarding the plaintext data to the accelerator 136 buffer in response to decrypting the encrypted data. For a transfer from accelerator 136 to host, transferring the data includes copying plaintext data from the accelerator 136 buffer and forwarding encrypted data to the host memory buffer in response encrypting the plaintext data.

The accelerator cryptographic engine 312 is configured to perform a cryptographic operation with the data in response to transferring the data and to update the AT in response to transferring the data. For a transfer from host to accelerator 136, performing the cryptographic operation includes decrypting encrypted data to generate plaintext data. For a transfer from accelerator 136 to host, performing the cryptographic operation includes encrypting plaintext data to generate encrypted data.

The host validator 308 is configured to determine an expected AT based on the secure DMA transfer, to read the AT from the accelerator 136 in response to securely writing the finalization command, and to determine whether the AT from the accelerator 136 matches the expected AT. The host validator 308 may be further configured to indicate success if the ATs match and to indicate failure if the ATs do not match.

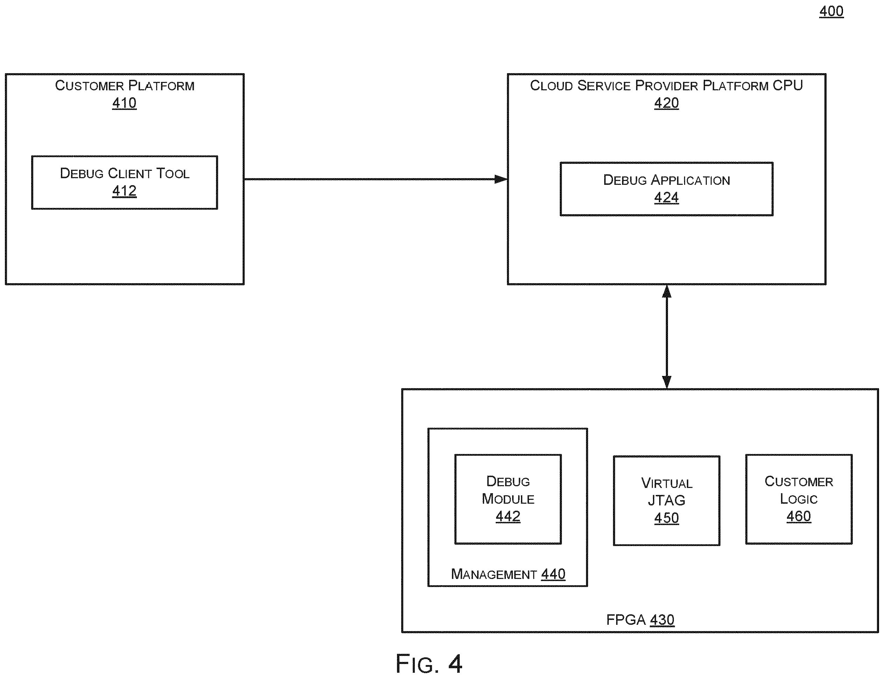

Figs. 4-7 are simplified block diagrams of a computing environment 400 which may be adapted to implement operations for secure debug of an FPGA, according to embodiments. Fig. 4 presents a high-level architecture of a computing environment. Referring first to Fig. 4, in some examples the computing environment comprises a customer platform 410 communicatively coupled to a cloud service provider platform CPU 420, which is, in turn, communicatively coupled to an FPGA 430. In some examples the customer platform 410 hosts one or more debug client tool(s) 412, which execute on the customer platform 410. The cloud service provider platform CPU 420 hosts a debug application 424. The FPGA 430 hosts a management module 440 which comprises a debug module 442, a virtual JTAG interface 450, and customer logic 460 which may reside in a suitable computer-readable memory of the FPGA.

In some examples the debug application 424 which executes on the cloud service provider platform CPU 420 may be communicatively coupled to the FPGA 430 via a suitable communication interface such as a PCIe interface, a USB interface, or a JTAG interface. The debug application 424 reads from or writes to one or more debug registers on the FPGA 430. The debug application 424 programs and manages the debug module 442, which executes on the FPGA 430, and formats debug data before making it available to the debug client tool 412 over a network.

In some examples one or more debug module(s) 442 in the FPGA 430 can probe the customer logic 460 and provide debug hooks to the debug application 424. The debug registers in the debug nodule 442 are accessible for host software to read and write. Host software may send a request to read a certain debug vector or it may write a value to apply to a debug vector. In some examples, a virtual JTAG module 450 enables accessing various debug vectors inside customer logic 460.

In some examples, the debug client tool(s) 412 which execute on the customer platform 410 communicates with the debug application 424 via well-defined interface to enable customer to examine or modify the intermediate data and hardware states of their code running on the FPGA 430.

By way of a high-level overview, in some examples a customer may include one or more hardware vendor provided debug modules such as, for example, a signal tap and/or a virtual JTAG interface 450 when compiling their hardware design for an FPGA 430. The customer may program the bitstream into the FPGA 430, e.g., using in encrypted application. The customer then launches the debug client tool 412 which communicates with the debug application 424 on the cloud service platform CPU. The debug application 424 interacts with debug module 442 on the FPGA 430, which uses the virtual JTAG interface 450 to read values from debug registers in the customer logic 460. Debug data collected from the customer logic is exposed to the debug application 424 and/or the debug client tool 412.

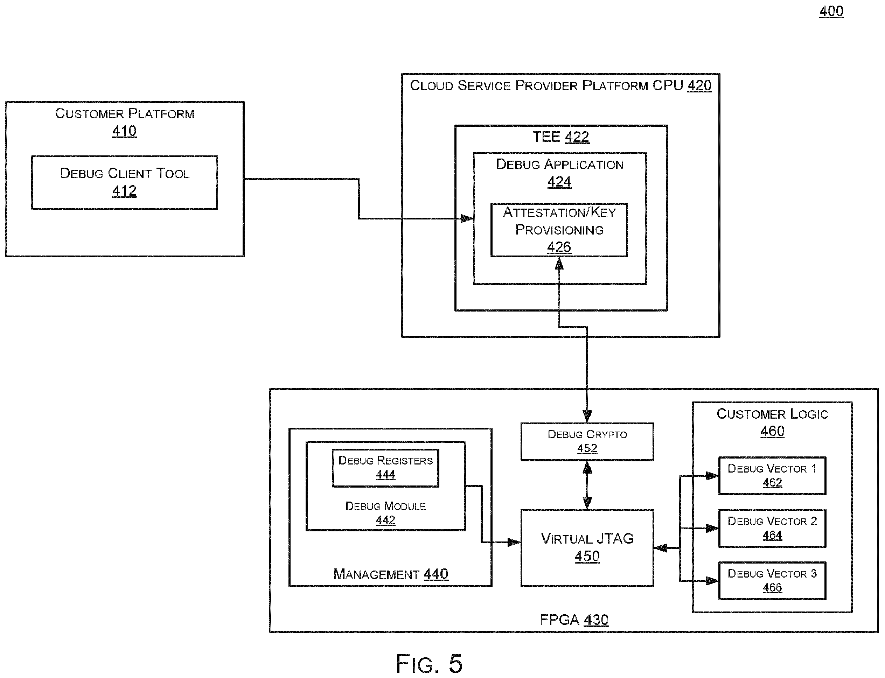

Figs. 5 provides a more detailed illustration of various examples of the computing environment 400. Referring to Fig. 5, in some examples the cloud service provider platform CPU 420 may comprise (or be communicatively coupled to) a trusted execution environment (TEE) 422. In such embodiments the debug application 424 may reside in the TEE 422. In addition, TEE 422 may comprise an attestation/key provisioning (AKP) module 426. The virtual JTAG interface 450 may comprise a debug cryptographic module 452 communicatively coupled to the attestation/key provisioning module 426 in the MMIO path between the CPU 420 and the FPGA 430. Customer logic 460 comprises a plurality of debug vectors, i.e., debug vector 1 462, debug vector 2 464, debug vector 3 466. The debug module 442 comprises one or more debug registers 444.

In the example depicted in Fig. 5, the debug client tool 412 is an application that executes on the customer platform 410 and communicates with the debug application 424 that executes on the cloud service provider platform CPU 420 over a protected network interface. A customer may use the debug client tool 412 to specify which IP on the FPGA 430 to debug, which debug vectors to expose, etc. The debug client tool 412 may have a graphical interface to display the debug information requested by the customer.

In some examples the debug application 424 reads the debug register(s) 444 in the FPGA 430 and prepares the data from the debug registers 444 for consumption by the debug client tool 412. In the embodiment depicted in Fig. 5 the debug application 424 resides in the TEE 422 such that is can operate securely on the debug data read from the FPGA 430. The FPGA 430 may be assumed to have a root of trust and is capable of attesting to the debug application 424. The AKP module 426 obtains attestation data from the FPGA 430 and verifies the FPGA 430. In addition, the AKP module 426 is responsible for programming a cryptographic key (e.g., a symmetric key) and the address range of the debug registers 444 into the debug cryptographic module 452 on the FPGA 430. This ensures that the debug cryptographic module 452 performs encryption/decryption only when the debug registers 444 are being accessed. While the AKP module 426 in Fig. 5 is shown as a component of the debug application 424, it can be implemented as an independent attestation and key provisioning service which is invoked by the debug application 424 for attesting the FPGA 430, obtaining the FPGA configuration information securely, and programming a shared secret key on behalf of the debug application 424.

In some examples the debug cryptographic module 452 may be situated in a static region of the FPGA 430, such that the customer does not have to integrate the debug cryptographic module 452 into their hardware design. The debug cryptographic module implements cryptographic access control of debug MMIO registers 444. In some examples the debug registers 444 may also be positioned at fixed location. In some examples the debug cryptographic module 452 may implement a protocol that supports encryption only if integrity of debug content is important. In other examples the protocol may also include sending and verifying a message authentication code (MAC) for the command and the data. Compromise of debug data integrity would result in preventing the customer from successfully debugging their design, which may be a lower level threat compared to the threat of data leakage. In some examples the debug cryptographic module 452 may be programmed with a shared secret key which is known only to the debug application 424.

The debug module 442 exposes debug registers 444 to the host debug client tool 412. Internally, the debug module 442 communicates with the virtual JTAG module 450, which in turn implements a mechanism to read/write debug vectors 462, 462, 466 from the customer logic 460.

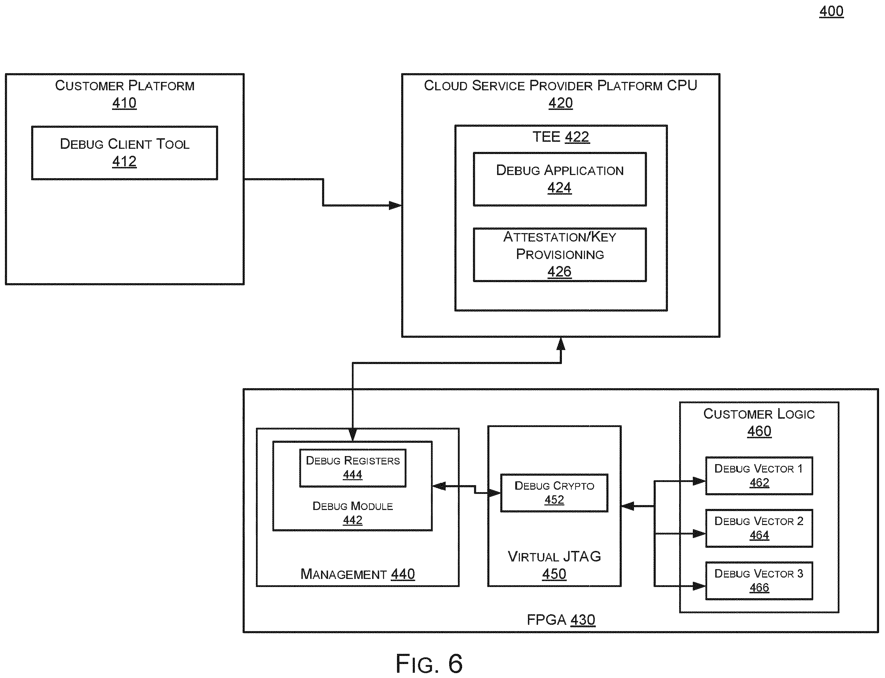

Fig. 6 is a schematic illustration of another example of a computing environment 400. In the example depicted in Fig. 6 the debug cryptographic module 452 may be integrated with the customer code and compiled into customer's design along with the virtual JTAG module 450. When situated in the JTAG module 450, data in the debug registers 444 remain encrypted and the encryption/decryption happens downstream.

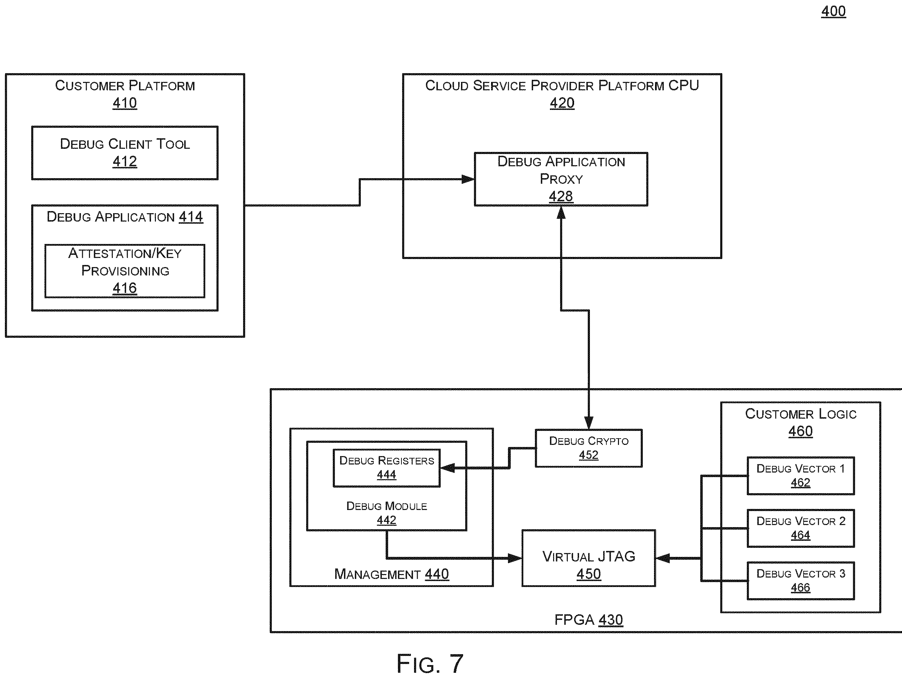

Fig. 7 is a schematic illustration of another example of a computing environment 400. In the example depicted in Fig. 7, the cloud service provider platform CPU 420 does not have a TEE. In this instance, the debug application 414 executes on the customer platform 414, which is assumed to be secure. In this example, a debug application proxy 428 executes on the cloud service provider platform CPU 420 and communicates with the debug application 414 on the customer platform 410. The debug application 414 sends the prepared commands, which are encrypted with a key that is shared with the FPGA debug cryptographic module 452. The debug proxy 428 performs reads and writes to the FPGA debug registers 444. However, data is encrypted by the debug application 414 and passes through the debug application proxy 428 in an encrypted format.

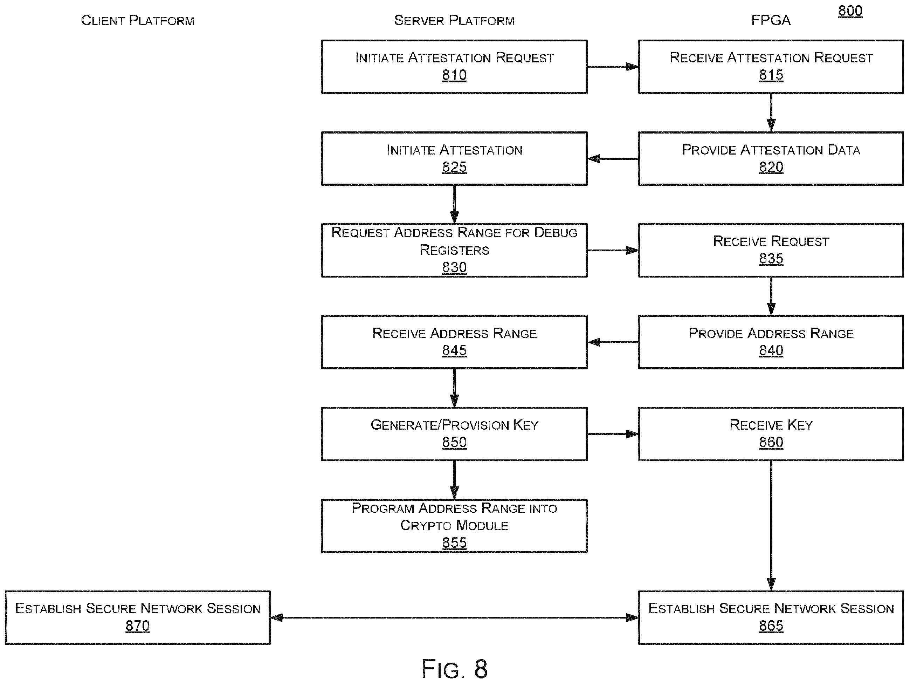

Having described various different examples of computing environments suitable to implement a secure debug of an FPGA design, methods to implement a secure debug of an FPGA design will now be described with reference to Figs. 8-9. Fig. 8 is a flow diagram illustrating setup operations in a method 800 to implement secure debut of an FPGA. Referring to Fig. 8, at operation 810 the AKP module 424 sends an attestation request to the FPGA 430. At operation 815 the FPGA 430 receives the request, and at operation 820 the FPGA 430 provides attestation data in response to the request. In some examples the attestation data may include the FPGA manufacturer ID, a device ID, identity and measurement of one or more bitstreams, and other metadata. At operation 825 the AKP module 424 initiates a verification process using the attestation data received from the FPGA 430. In some examples verification may be performed using an off-platform verification service, or by comparing against a policy provisioned into the AKP module 424. In some examples the policy may specify things like manufacturer ID, a firmware version and bitstream measurement, and the like.

Once attestation is verified, at operation 830 the AKP module 424 initiates a request to the FPGA 430 for the memory address range of the debug registers 444. At operation 835 the FPGA 430 receives the request, and at operation 840 the FPGA provides the memory address range to the AKP module.

At operation 845 the AKP module 824 receives the address range for the debug registers, and at operation 850 the AKP module 824 generates a cryptographic key (e.g., a symmetric key pair) for communication with the FPGA and provisions the key into the debug cryptographic module 452 of the FPGA 430. In some examples the provisioning may be provided using a standard protocol (e.g., a signed Diffie Hellman exchange with a message authentication code). At operation 855 the AKP module 824 programs the memory address range of the debug registers into the debug cryptographic module 452 so that encryption/decryption is performed only when the target address of an MMIO request falls within the address range of the debug registers.

At operation 865 the debug cryptographic module 452 initiates a secure network session with the debug client tool 412, which reciprocates at operation 870, thereby establishing a secure network session.

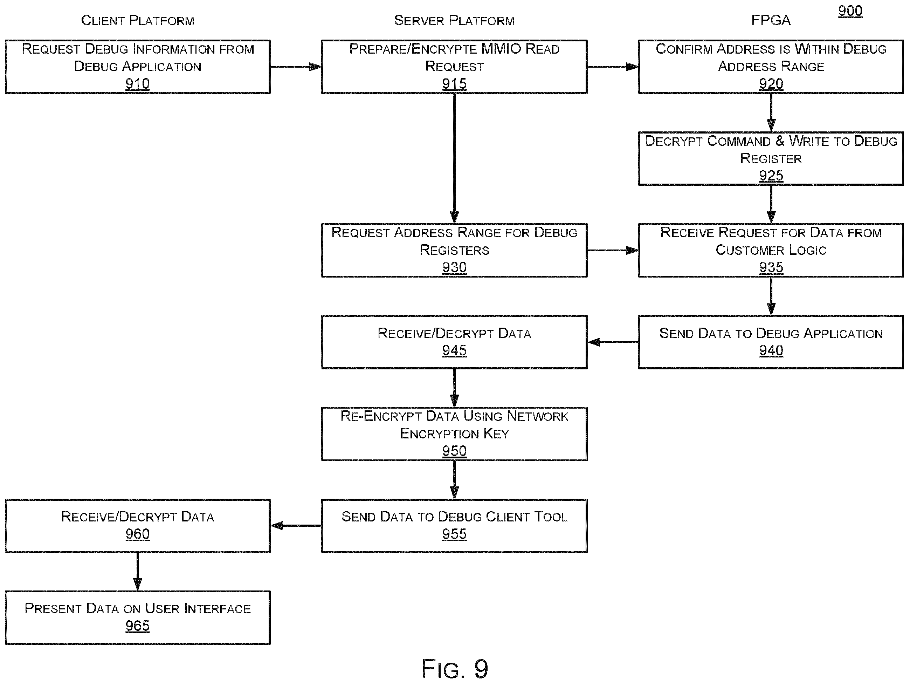

Fig. 9 is a flow diagram illustrating operations in a method to implement secure debut of an FPGA. Referring to Fig. 9, at operation 910 the debug client tool 412 on the customer platform 410 sends a request to the debug application 424 on the cloud service provider platform CPU 420 for certain debug information for the FPGA 430. At operation 915, in response to the request, the debug application 424 prepares a MMIO read request, encrypts the request, and sends the encrypted request to the FPGA 430. In the embodiments depicted in Fig. 5 and Fig. 7 the request may be sent to the debug cryptographic module 452. In the embodiment depicted in Fig. 6 the request may be sent to the debug module 442, which conveys it to the debug cryptographic module 452.

At operation 920 the debug cryptographic module 452 checks the target MMIO address against the debug address range, which may be stored in a memory location such as a range register. If the target MMIO address falls within the debug address range, then at operation 925 the debug cryptographic module 452 decrypts the read request before it is written into a debug register 444.

At operation 930 the presence of a command in the debug register 444 triggers the debug cryptographic module 452 to send a request to the virtual JTAG interface 450 to read the requested data from the customer logic 460. The request is received at operation 935 and, at operation 940, when the data becomes available in the debug register 444, the debug cryptographic module 452 sends the data to the debug application 424 as a read response. The debug cryptographic module 452 decrypts the data before sending the data to the debug application 424 at operation 940.

At operation 945 the debug application 424 receives and decrypts the read data received from the FPGA 430. Optionally, the debug application 424 may format and/or restructure the data. At operation 950 the debug application re-encrypts the data using the network encryption key which is shared with the debug client tool 412, and at operation 950 sends the data to the debug client tool 412. At operation 960 the debug client tool 412 receives the read data and at operation 965 the debug client tool may present the read data on a user interface. For example, the debug client tool 412 may present the read data on a graphical user interface.

It should be appreciated that, in some embodiments, the methods illustrated in Fig. 8 and Fig. 9 may be embodied as various instructions stored on a computer-readable media, which may be executed by suitable processing circuitry to cause one or more devices to perform the respective methods. The computer-readable media may be embodied as any type of media capable of being read by the computing device 100 including, but not limited to, the memory 130, the data storage device 132, firmware devices, other memory or data storage devices of the computing device 100, portable media readable by a peripheral device 138 of the computing device 100, and/or other media.

Thus, the components and structures described with reference to Figs. 1-7 and the methods described with reference to Figs. 8-9 enable a secure debug of an FPGA device in a cloud computing environment. In a virtualized computing environment, physical computing devices can be partitioned into multiple virtual devices. Different users (i.e., different virtual machines (VMs)) running on one or more CPUs may be assigned different virtual devices by the operating system (OS) and/or the virtual machine manager (VMM). Applications which execute in a virtualized computing environment rely on the OS and the VMM to provide exclusive (i.e., protected) access to a virtual device, such that the application's secrets may be shared securely with the virtual device. In various techniques for isolation described above, the processors (i.e., CPUs) of a computing device can access the memory of devices through memory mapped input/output (MMIO) requests. The OS and/or the VMM may manage isolation between the VMs by mapping a portion of (or all) the physical memory address space of the virtual device to a single VM, such that only one VM has access to that portion of the physical memory space. However, in some instances, an application may not have a relationship of trust with either the OS or the VMM, and therefore the application cannot trust that data shared with a virtual device executing on a physical device will not be accessed or modified by the OS and VMM. Or, that the OS or VMM will not give access to the physical memory space in the device assigned to the application to other VMs.

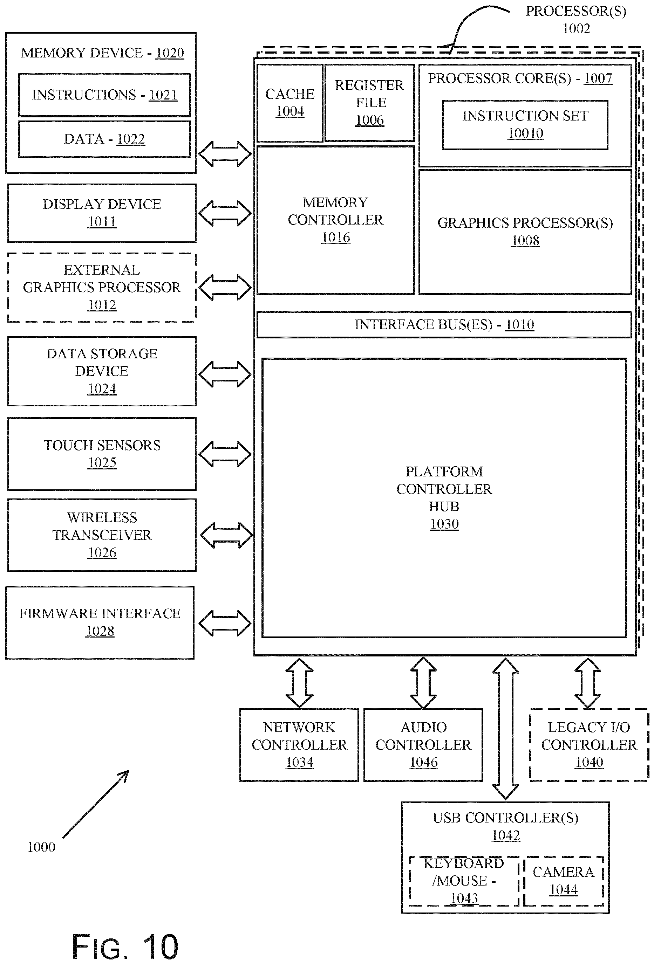

Fig. 10 illustrates an embodiment of an exemplary computing architecture that may be suitable for implementing various embodiments as previously described. In various embodiments, the computing architecture 1000 may comprise or be implemented as part of an electronic device. In some embodiments, the computing architecture 1000 may be representative, for example of a computer system that implements one or more components of the operating environments described above. In some embodiments, computing architecture 1000 may be representative of one or more portions or components of a digital signature signing system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 1000. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 1000 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 1000.

As shown in Figure 10, the computing architecture 1000 includes one or more processors 1002 and one or more graphics processors 1008, and may be a single processor desktop system, a multiprocessor workstation system, or a server system having a large number of processors 1002 or processor cores 1007. In on embodiment, the system 1000 is a processing platform incorporated within a system-on-a-chip (SoC or SOC) integrated circuit for use in mobile, handheld, or embedded devices.

An embodiment of system 1000 can include, or be incorporated within a server-based gaming platform, a game console, including a game and media console, a mobile gaming console, a handheld game console, or an online game console. In some embodiments system 1000 is a mobile phone, smart phone, tablet computing device or mobile Internet device. Data processing system 1000 can also include, couple with, or be integrated within a wearable device, such as a smart watch wearable device, smart eyewear device, augmented reality device, or virtual reality device. In some embodiments, data processing system 1000 is a television or set top box device having one or more processors 1002 and a graphical interface generated by one or more graphics processors 1008.

In some embodiments, the one or more processors 1002 each include one or more processor cores 1007 to process instructions which, when executed, perform operations for system and user software. In some embodiments, each of the one or more processor cores 1007 is configured to process a specific instruction set 1009. In some embodiments, instruction set 1009 may facilitate Complex Instruction Set Computing (CISC), Reduced Instruction Set Computing (RISC), or computing via a Very Long Instruction Word (VLIW). Multiple processor cores 1007 may each process a different instruction set 1009, which may include instructions to facilitate the emulation of other instruction sets. Processor core 1007 may also include other processing devices, such a Digital Signal Processor (DSP).

In some embodiments, the processor 1002 includes cache memory 1004. Depending on the architecture, the processor 1002 can have a single internal cache or multiple levels of internal cache. In some embodiments, the cache memory is shared among various components of the processor 1002. In some embodiments, the processor 1002 also uses an external cache (e.g., a Level-3 (L3) cache or Last Level Cache (LLC)) (not shown), which may be shared among processor cores 1007 using known cache coherency techniques. A register file 1006 is additionally included in processor 1002 which may include different types of registers for storing different types of data (e.g., integer registers, floating point registers, status registers, and an instruction pointer register). Some registers may be general-purpose registers, while other registers may be specific to the design of the processor 1002.

In some embodiments, one or more processor(s) 1002 are coupled with one or more interface bus(es) 1010 to transmit communication signals such as address, data, or control signals between processor 1002 and other components in the system. The interface bus 1010, in one embodiment, can be a processor bus, such as a version of the Direct Media Interface (DMI) bus. However, processor busses are not limited to the DMI bus, and may include one or more Peripheral Component Interconnect buses (e.g., PCI, PCI Express), memory busses, or other types of interface busses. In one embodiment the processor(s) 1002 include an integrated memory controller 1016 and a platform controller hub 1030. The memory controller 1016 facilitates communication between a memory device and other components of the system 1000, while the platform controller hub (PCH) 1030 provides connections to I/O devices via a local I/O bus.

Memory device 1020 can be a dynamic random-access memory (DRAM) device, a static random-access memory (SRAM) device, flash memory device, phase-change memory device, or some other memory device having suitable performance to serve as process memory. In one embodiment the memory device 1020 can operate as system memory for the system 1000, to store data 1022 and instructions 1021 for use when the one or more processors 1002 executes an application or process. Memory controller hub 1016 also couples with an optional external graphics processor 1012, which may communicate with the one or more graphics processors 1008 in processors 1002 to perform graphics and media operations. In some embodiments a display device 1011 can connect to the processor(s) 1002. The display device 1011 can be one or more of an internal display device, as in a mobile electronic device or a laptop device or an external display device attached via a display interface (e.g., DisplayPort, etc.). In one embodiment the display device 1011 can be a head mounted display (HMD) such as a stereoscopic display device for use in virtual reality (VR) applications or augmented reality (AR) applications.

In some embodiments the platform controller hub 1030 enables peripherals to connect to memory device 1020 and processor 1002 via a high-speed I/O bus. The I/O peripherals include, but are not limited to, an audio controller 1046, a network controller 1034, a firmware interface 1028, a wireless transceiver 1026, touch sensors 1025, a data storage device 1024 (e.g., hard disk drive, flash memory, etc.). The data storage device 1024 can connect via a storage interface (e.g., SATA) or via a peripheral bus, such as a Peripheral Component Interconnect bus (e.g., PCI, PCI Express). The touch sensors 1025 can include touch screen sensors, pressure sensors, or fingerprint sensors. The wireless transceiver 1026 can be a Wi-Fi transceiver, a Bluetooth transceiver, or a mobile network transceiver such as a 3G, 4G, or Long Term Evolution (LTE) transceiver. The firmware interface 1028 enables communication with system firmware, and can be, for example, a unified extensible firmware interface (UEFI). The network controller 1034 can enable a network connection to a wired network. In some embodiments, a high-performance network controller (not shown) couples with the interface bus 1010. The audio controller 1046, in one embodiment, is a multi-channel high definition audio controller. In one embodiment the system 1000 includes an optional legacy I/O controller 1040 for coupling legacy (e.g., Personal System 2 (PS/2)) devices to the system. The platform controller hub 1030 can also connect to one or more Universal Serial Bus (USB) controllers 1042 connect input devices, such as keyboard and mouse 1043 combinations, a camera 1244, or other USB input devices.

### EXAMPLES

Illustrative examples of the technologies disclosed herein are provided below. An embodiment of the technologies may include any one or more, and any combination of, the examples described below.
Example 1 includes an apparatus comprising an accelerator device comprising processing circuity to facilitate acceleration of a processing workload executable on a remote processing device, a computer-readable memory to store logic operations executable on the accelerator device, and a debug module comprising one or more debug registers to store debug data for the logic operations executable on the accelerator device, and processing circuitry to receive, from a debug application on the remote processing device, a memory access request directed to a target debug register of the one or more debug registers, encrypt the debug data in the target debug register to generate encrypted debug data, and return the encrypted debug data to the debug application.
Example 2 includes the subject matter of Example 1, further comprising at least one range register to store a memory address range of the one or more debug registers.
Example 3 includes the subject matter of any of Examples 1-2, wherein the debug registers reside in a static memory location of the apparatus.
Example 4 includes the subject matter of any of Examples 1-3, the debug module comprising processing circuitry to receive, from the debug application, an attestation request; and in response to the attestation request, return attestation data to the debug application.
Example 5 includes the subject matter of any of Examples 1-4, further comprising processing circuitry to receive, from the debug application, a request for an address range of the one or more debug registers; and in response to the request, return the address range of the one or more debug registers to the debug application.
Example 6 includes the subject matter of any of Examples 1-5, the debug module comprising processing circuitry to receive, from the debug application, a cryptographic key; and store the cryptographic key in a secure memory location.
Example 7 includes the subject matter of any of Examples 1-6, the debug module comprising processing circuitry to establish a secure network session with a client platform using the cryptographic key.
Example 8 includes the subject matter of any of Examples 1-7, the debug module further comprising a joint test action group (JTAG) interface.
Example 9 is a computer-based method, comprising storing, in one or more debug registers of a debug module of an apparatus, debug data for the logic operations executable on the accelerator device; receiving, from a debug application on the remote processing device, a memory access request directed to a target debug register of the one or more debug registers; encrypting the debug data in the target debug register to generate encrypted debug data; and returning the encrypted debug data to the debug application.
Example 10 includes the subject matter of Example 9, further comprising storing, in at least one range register, a memory address range of the one or more debug registers.
Example 11 includes the subject matter of any of Examples 9-10, further comprising receiving, from the debug application, an attestation request; and in response to the attestation request, returning attestation data to the debug application.
Example 12 includes the subject matter of any of Examples 9-11, further comprising receiving, from the debug application, a request for an address range of the one or more debug registers; and in response to the request, returning the address range of the one or more debug registers to the debug application.
Example 13 includes the subject matter of any of Examples 9-12, further comprising receiving, from the debug application, a request for an address range of the one or more debug registers; and in response to the request, returning the address range of the one or more debug registers to the debug application.
Example 14 includes the subject matter of any of Examples 9-13, further comprising establishing a secure network session with a client platform using the cryptographic key.
Example 15 includes one or more computer-readable storage media comprising a plurality of instructions stored thereon that, in response to being executed, cause a computing device to store, in one or more debug registers of a debug module of an apparatus, debug data for the logic operations executable on the accelerator device; receive, from a debug application on the remote processing device, a memory access request directed to a target debug register of the one or more debug registers; encrypt the debug data in the target debug register to generate encrypted debug data; and return the encrypted debug data to the debug application
Example 16 includes the subject matter of Example 15, further comprising a plurality of instructions stored thereon that, in response to being executed, cause the computing device to store, in at least one range register, a memory address range of the one or more debug registers.
Example 17 includes the subject matter of any of Examples 15-16, further comprising a plurality of instructions stored thereon that, in response to being executed, cause the computing device to receive, from the debug application, an attestation request; and in response to the attestation request, return attestation data to the debug application.
Example 18 includes the subject matter of any of Example 16-17, further comprising a plurality of instructions stored thereon that, in response to being executed, cause the computing device to receive, from the debug application, a request for an address range of the one or more debug registers; and in response to the request, return the address range of the one or more debug registers to the debug application.
Example 19 includes the subject matter of any of Examples 16-18, further comprising a plurality of instructions stored thereon that, in response to being executed, cause the computing device to receive, from the debug application, a request for an address range of the one or more debug registers; and in response to the request, return the address range of the one or more debug registers to the debug application.
Example 20 includes the subject matter of any of Examples 16-19, further comprising a plurality of instructions stored thereon that, in response to being executed, cause the computing device to establish a secure network session with a client platform using the cryptographic key.

The above Detailed Description includes references to the accompanying drawings, which form a part of the Detailed Description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In addition "a set of" includes one or more elements. In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim. Moreover, in the following claims, the terms "first," "second," "third," etc. are used merely as labels, and are not intended to suggest a numerical order for their objects.

The terms "logic instructions" as referred to herein relates to expressions which may be understood by one or more machines for performing one or more logical operations. For example, logic instructions may comprise instructions which are interpretable by a processor compiler for executing one or more operations on one or more data objects. However, this is merely an example of machine-readable instructions and examples are not limited in this respect.

The terms "computer readable medium" as referred to herein relates to media capable of maintaining expressions which are perceivable by one or more machines. For example, a computer readable medium may comprise one or more storage devices for storing computer readable instructions or data. Such storage devices may comprise storage media such as, for example, optical, magnetic or semiconductor storage media. However, this is merely an example of a computer readable medium and examples are not limited in this respect.

The term "logic" as referred to herein relates to structure for performing one or more logical operations. For example, logic may comprise circuitry which provides one or more output signals based upon one or more input signals. Such circuitry may comprise a finite state machine which receives a digital input and provides a digital output, or circuitry which provides one or more analog output signals in response to one or more analog input signals. Such circuitry may be provided in an application specific integrated circuit (ASIC) or field programmable gate array (FPGA). Also, logic may comprise machine-readable instructions stored in a memory in combination with processing circuitry to execute such machine-readable instructions. However, these are merely examples of structures which may provide logic and examples are not limited in this respect.

Some of the methods described herein may be embodied as logic instructions on a computer-readable medium. When executed on a processor, the logic instructions cause a processor to be programmed as a special-purpose machine that implements the described methods. The processor, when configured by the logic instructions to execute the methods described herein, constitutes structure for performing the described methods. Alternatively, the methods described herein may be reduced to logic on, e.g., a field programmable gate array (FPGA), an application specific integrated circuit (ASIC) or the like.

In the description and claims, the terms coupled and connected, along with their derivatives, may be used. In particular examples, connected may be used to indicate that two or more elements are in direct physical or electrical contact with each other. Coupled may mean that two or more elements are in direct physical or electrical contact. However, coupled may also mean that two or more elements may not be in direct contact with each other, but yet may still cooperate or interact with each other.

Reference in the specification to "one example" or "some examples" means that a particular feature, structure, or characteristic described in connection with the example is included in at least an implementation. The appearances of the phrase "in one example" in various places in the specification may or may not be all referring to the same example.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with each claim standing on its own as a separate embodiment. The scope of the embodiments disclosed herein is to be determined with reference to the appended claims, along with the full scope of equivalents to which such claims are entitled.

Although examples have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus, comprising:
an accelerator device comprising processing circuity to facilitate acceleration of a processing workload executable on a remote processing device;
a computer-readable memory to store logic operations executable on the accelerator device; and
a debug module comprising:
one or more debug registers to store debug data for the logic operations executable on the accelerator device; and
processing circuitry to:
receive, from a debug application on the remote processing device, a memory access request directed to a target debug register of the one or more debug registers;
encrypt the debug data in the target debug register to generate encrypted debug data; and
return the encrypted debug data to the debug application.

2. The apparatus of claim 1, the debug module further comprising:
at least one range register to store a memory address range of the one or more debug registers.

3. The apparatus of any one of claims 1-2, wherein the debug registers reside in a static memory location of the apparatus.

4. The apparatus of any one of claims 1-3, the debug module comprising processing circuitry to:
receive, from the debug application, an attestation request; and
in response to the attestation request, return attestation data to the debug application.

5. The apparatus of any one of claims 1-4, the debug module comprising processing circuitry to:
receive, from the debug application, a request for an address range of the one or more debug registers; and
in response to the request, return the address range of the one or more debug registers to the debug application.

6. The apparatus of any one of claims 1-5, the debug module comprising processing circuitry to:
receive, from the debug application, a cryptographic key; and
store the cryptographic key in a secure memory location.

7. The apparatus of any one of claims 1-2, the debug module comprising processing circuitry to:
establish a secure network session with a client platform using the cryptographic key.

8. The apparatus of any one of claims 1-7, the debug module further comprising:
a joint test action group (JTAG) interface.

9. A computer-based method, comprising:
storing, in one or more debug registers of a debug module of an apparatus, debug data for the logic operations executable on the accelerator device;
receiving, from a debug application on the remote processing device, a memory access request directed to a target debug register of the one or more debug registers;
encrypting the debug data in the target debug register to generate encrypted debug data; and
returning the encrypted debug data to the debug application.

10. The method of claim 9, further comprising:
storing, in at least one range register, a memory address range of the one or more debug registers.

11. The method of any one of claims 9-10, further comprising:
receiving, from the debug application, an attestation request; and
in response to the attestation request, returning attestation data to the debug application.

12. The method of any one of claims 9-11, further comprising:
receiving, from the debug application, a request for an address range of the one or more debug registers; and
in response to the request, returning the address range of the one or more debug registers to the debug application.

13. The method of any one of claims 9-12, further comprising:
receiving, from the debug application, a cryptographic key; and
storing the cryptographic key in a secure memory location.

14. The method of any one of claims 9-13 further comprising:
establishing a secure network session with a client platform using the cryptographic key.
